# EUROPÄISCHE PATENTSCHRIFT

(11) **EP 0 912 839 B1**
(45) Veröffentlichungstag und Bekanntmachung des Hinweises auf die Patenterteilung: **26.11.2003**
(21) Anmeldenummer: 97931745.0
(22) Anmeldetag: 02.07.1997
(51) Int. Cl.: F16D 65/12, B60B 27/00

(54) **BREMSSCHEIBENEINHEIT**
BRAKE DISK UNIT
UNITE DE DISQUE DE FREIN

(30) Priorität: 13.07.1996 DE 19628331
(43) Veröffentlichungstag der Anmeldung: 06.05.1999
(73) Patentinhaber: Continental Teves AG & Co. oHG, 60488 Frankfurt (DE)
(72) Erfinder: BAUER, Jürgen, D-65187 Wiesbaden (DE); METZEN, Hans-Peter, D-61352 Bad Homburg (DE); THIEL, Rudolf, D-60488 Frankfurt (DE)
(74) Vertreter: Portwich, Peter
(86) Internationale Anmeldenummer: EP9703481
(87) Internationale Veröffentlichungsnummer: WO98002672

(56) Entgegenhaltungen:
- EP-A- 0 215 597
- EP-A- 0 235 382
- WO-A-93/14947
- CH-A- 440 364
- DE-A- 1 945 934
- DE-A- 2 201 885
- DE-A- 3 436 729
- DE-U- 9 406 595
- FR-A- 2 177 290
- GB-A- 752 101

## Beschreibung

Die Erfindung bezieht sich auf eine, entsprechend dem Oberbegriff des Patentanspruchs 1, aus mehreren Teilen zusammengesetzte Bremsscheibe für eine Scheibenbremse, bei der ein Reibring lösbar und drehfest mittels eines Befestigungselementes an einem Flansch befestigt ist.

Allgemein sind aus dem Stand der Technik mehrteilige Bremsscheibenanordnungen, bei denen ein Reibring lösbar oder unlösbar an einem Halteteil befestigt ist, in unterschiedlichsten Ausführungsformen bekannt.

Beispielsweise offenbart die DE 43 22 231 A1 eine Reiblamelle aus Kohlefasern, die für den Einsatz in einer Kupplung oder Bremse vorgesehen ist und die an einem zugehörigen Trägerbauteil befestigt wird. Dabei verfügt die Reiblamelle an ihrem Innendurchmesser über eine radiale Verzahnung, die in eine entsprechende Verzahnung auf der Mantelfläche des Trägerbauteiles formschlüssig einzugreifen vermag. Dadurch entsteht eine drehfeste Verbindung von Reiblamelle und Trägerbauteil, die zur Übertragung von Umfangskräften zwischen diesen beiden Elementen geeignet ist. Es hat sich bei einer derartigen formschlüssigen Befestigung der Reiblamelle am-Trägerbauteil als.nachteilig erwiesen, daß eine toleranzgenaue Herstellung der ineinandergreifenden Verzahnungen einen erheblichen Fertigungsaufwand erfordert. Weiterhin ergibt sich bei einer solch starren Befestigungsanordnung ein unkomfortabler Übergang der Umfangskräfte zwischen Reiblamelle und Trägerbauteil, der die Gefahr der Beschädigung insbesondere der Reiblamelle in sich birgt.

Aus der DE 34 41 304 A1 ist eine Scheibenbremseinrichtung bekannt, bei der ein Reibring mittels Federelementen an einer Radnabe lösbar befestigt ist. In ähnlicher Weise zu der bereits beschriebenen Ausführung sind Reibring und Radnabe über eine Verzahnung miteinander drehfest verbunden. Eine Übertragung der Bremsumfangskräfte erfolgt damit über die einzelnen Zähne dieser Verzahnung. Ergänzend verfügt die Bremsscheibeneinrichtung über zusätzliche Federelemente, die innerhalb der Verzahnung in Nuten der Radnabe und des Reibringes angeordnet sind. Die im wesentlichen W-förmig ausgebildeten Federelemente sind im Einbauzustand radial vorgespannt und sorgen damit für eine axiale Verriegelung des Reibringes gegenüber der Radnabe. Eine derartige Befestigung mit axialer Verriegelung weist als schwimmende Befestigungsmethode sowohl in axialer als auch in Umfangsrichtung ein Spiel auf. Der Nachteil der beschriebenen Scheibenbremseinrichtung besteht in der aufwendigen Herstellung der Verzahnung sowie insbesondere der Nuten in Reibring und Radnabe, die zur Aufnahme der Federelemente vorgesehen sind. Hierbei ist insbesondere das Problem der Maßgenauigkeit der Verzahnungsflächen sowie der Nuten entscheidend, was erhebliche Bedeutung für die Zentrierung des Reibringes und die axial maßgetreue Positionierung des Reibringes hat.

Aus der WO 93/14947 A1 ist schließlich eine Bremsscheibeneinheit bekannt, bei der ein Reibring in ähnlicher Weise über eine Verzahnung an seinem Innendurchmesser mit einer Radnabe drehfest verbunden ist. Die Umfangskraftübertragung im Falle einer Bremsbetätigung erfolgt bei einer derartigen Anordnung über nahezu die gesamte Flankenlänge der einzelnen Zähne innerhalb der Verzahnung. Außerdem sind zwischen den Zahnflanken am Innendurchmesser des Reibringes radial verlaufende Schlitze eingeformt, um eine thermische Beeinträchtigung der Radnabe zu reduzieren. Die Bereitstellung eines solchen Reibringes mit Verzahnung und Schlitzen ist aufgrund des erforderlichen Bearbeitungsaufwandes unerwünscht teuer.

Die Aufgabe der vorliegenden Erfindung besteht darin, eine aus Reibring und Flansch lösbar zusammengesetzte Bremsscheibeneinheit anzugeben, die hinsichtlich ihrer Kraftübertragung in Umfangsrichtung verbessert ist sowie eine einfache und für die Fertigung günstige Befestigung des Reibringes am Flansch gewährleistet.

Die Lösung der Aufgabe ergibt sich erfindungsgemäß durch die Merkmalskombination des Patentanspruchs 1. Dabei besitzt der Reibring an seinem Innendurchmesser radial hervorragende Zähne, die in zugehörige Ausnehmungen am Außenumfang des Flansches hineinragen und in Umfangsrichtung derart elastisch ausgebildet sind, daß bei Belastung der Bremsscheibeneinheit in Umfangsrichtung alle Zähne am Reibring an der Kraftübertragung beteiligt sind. Dadurch ergibt sich eine weiche und kontinuierliche Kraftübertragung in Umfangrichtung vom Reibring auf den Flansch, was sowohl eine toleranzausgleichende Wirkung hat als auch ein Überlastungsschutz für jeden einzelnen Zahn am Reibring darstellt. Ferner weist jeder Zahn an seinem radial inneren Ende einen Abschnitt auf, der sowohl in Umfangsrichtung abgestuft und eingeschnürt ist als auch auf seiner axialen Innenseite einen radialen Absatz besitzt. Dies ermöglicht eine optimierte und insbesondere fertigungsvereinfachte Gestaltung der Zentrierung des Reibringes am Flansch sowie der axialen Anschlagfläche des Reibringes am Flansch. Außerdem werden dadurch einerseits die Herstellungskosten für Flansch und Reibring gesenkt und andererseits die Montage vereinfacht.

In einer bevorzugten Ausführungsform der Erfindung wird jeder Zahn des Reibringes in Umfangsrichtung von radial zum Bremsscheibenmittelpunkt verlaufenden Seitenflächen begrenzt. Damit wird ein radiales Klemmen des Reibringes am Flansch bei Aufweitung des Reibringes infolge thermischer Belastung vermieden.

Die Elastizität der Zähne am Reibring in Umfangsrichtung ergibt sich beispielsweise durch eine Kerbanordnung am Zahnfuß oder aber eine schmale, pinförmige oder rippenförmige Ausgestaltung des Zahnes.

Für Ausführungen der Bremsscheibeneinheit mit einer belüfteten Bremsscheibe, die aus zwei Reibringen mit radial dazwischen verlaufenden Stegen besteht, erweist es sich als vorteilhaft, die Zähne einstückig mit einem der Reibringe zu verbinden. In einer Weiterentwicklung verläuft auf der dem Bremsscheibeninneren zugewandten Zahnseite einer der zwischen den beiden Reibringen sich erstreckenden Stege zur Versteifung des Zahnes.

In einer Weiterbildung der Bremsscheibeneinheit ist zur Übertragung der Bremsumfangskräfte am Reibring lediglich ein Zahnpin vorgesehen, der die Abmessungen eines gegenüber den anderen Stegen zwischen den Reibringen verstärkten Steges aufweist.

In den Ansprüchen 7 bis 11 werden Maßnahmen am Flansch und am Reibring vorgeschlagen, die im wesentlichen eine optimierte und insbesondere fertigungsvereinfachte Gestaltung der Zentrierung des Reibringes am Flansch sowie der axialen Anschlagfläche des Reibringes am Flansch gestatten. Dadurch werden einerseits die Herstellungskosten für Flansch und Reibring gesenkt und andererseits wird die Montage vereinfacht.

Gemäß einer weiteren Variante der Bremsscheibeneinheit sind Maßnahmen am Flansch vorgesehen, die zur in Umfangsrichtung elastischen Anbindung der Reibringscheibe an den Flansch beitragen. Hierdurch wird eine kontinuierlich weiche Kraftübertragung in Umfangsrichtung ermöglicht.

Schließlich wird noch eine vorteilhafte Variante für eine Bremsscheibeneinheit vorgeschlagen, bei der zumindest ein Befestigungselement vorgesehen ist, das den Reibring axial wie auch in Umfangsrichtung am Flansch fixiert. Dabei wird die Verzahnung zwischen Flansch und Reibring durch das Befestigungselement selbst gebildet, das in einander zugehörigen, sich gegenüberliegenden Ausnehmungen der radialen Flanschaußenseite sowie der Reibringinnenseite angeordnet ist. Somit wird auch die gesamte Bremsumfangskraft über das bzw. die Befestigungselemente übertragen, wobei die Befestigungselemente als getrennte Bauteile vorteilhaft gezielt aus einem hochfesten Werkstoff ausgeführt werden können.

Ausführungsbeispiele der Erfindung werden anhand der Zeichnung in zwölf Figuren dargestellt und im folgenden näher erläutert.

Es zeigen:
- Fig. 1: eine teilgeschnittene räumliche Ansicht einer belüfteten Bremsscheibeneinheit aus Flansch, Reibringscheibe und Befestigungsring,
- Fig. 2: drei teilweise geschnittene Ansichten einer Bremsscheibeneinheit aus Flansch, Reibringscheibe und Befestigungsring mit Zentrierung und axialem Anschlag des Reibringes am Flansch,
- Fig. 3: vier teilweise geschnittene Ansichten einer Bremsscheibeneinheit aus Flansch, Reibringscheibe und Befestigungsring mit Zentrierung und axialem Anschlag der Reibringscheibe am Flansch,
- Fig. 4 - 6: Teilansichten dreier Varianten der Ausbildung eines vorstehenden Zahnes an der Reibringscheibe, der in Umfangsrichtung auf Belastung elastisch reagiert,
- Fig. 7 - 9: teiweise räumliche Ansichten dreier Varianten der Ausbildung eines Flansches mit in Umfangsrichtung elastisch ausgelegten Aufnahmestellen für die Reibringscheibe,
- Fig. 10: eine Draufsicht auf eine zusammengesetzte, mehrteilige Bremsscheibeneinheit mit mehreren Befestigungselemente,
- Fig. 11: eine vergrößerte räumliche Ansicht eines Befestigungselementes aus Fig. 10,
- Fig. 12: eine Draufsicht auf zwei Varianten einer zusammengesetzten, mehrteiligen Bremsscheibeneinheit mit Befestigungselementen, die einstückig miteinander verbunden sind.

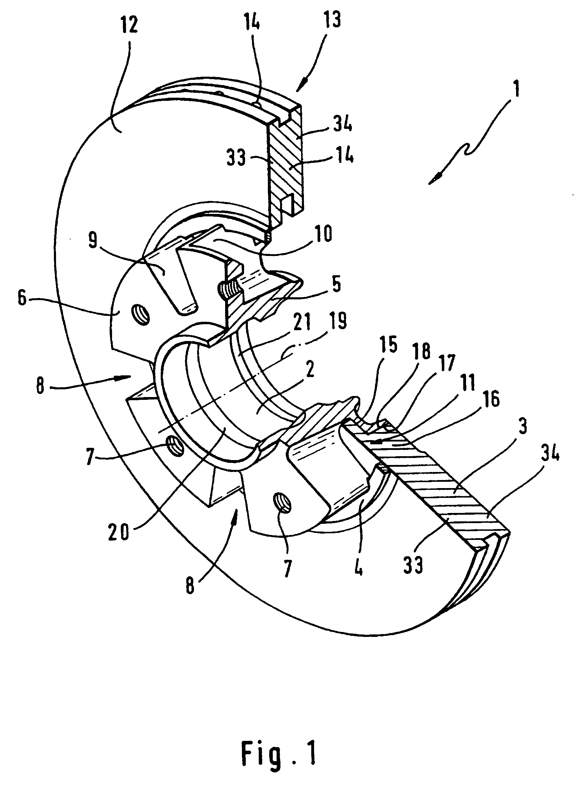

In Fig. 1 ist eine aus Flansch 2, Reibringscheibe 3 und Befestigungsring 4 zusammengesetzte Bremsscheibeneinheit 1 dargestellt. Dabei besteht der einstückige Flansch 2 im wesentlichen aus einem axial orientierten rohrförmigen Grundkörper 5 sowie einer mit dem Grundkörper am axial außenliegenden Flanschende verbundenen Anschlußplatte 6, die sich in einer parallel zur Reibringscheibe 3 orientierten Ebene erstreckt. Die Anschlußplatte 6 besitzt mehrere axiale Gewindebohrungen 7, an denen eine nicht gezeigte Felge eines Fahrzeugrades verschraubt werden kann. Gleichmäßig über den Umfang verteilt, wird die Anschlußplatte von trapezförmigen Ausnehmungen 8 unterbrochen, die über die gesamte axiale Erstreckung des Grundkörpers 5 in Umfangsrichtung von seitlichen Flanken 9,10 begrenzt werden. Die Flanken 9,10 schließen unmittelbar an die Anschlußplatte 6 an und verlaufen in axialer Richtung über den Grundkörper 5, wobei sie gleichzeitig radial zum Bremsscheibenmittelpunkt ausgerichtet sind.

In jede der Ausnehmungen 8 am Flansch greift jeweils ein am Innendurchmesser der Reibringscheibe 3 radial nach innen vorstehender Zahn 11 ein. Im montierten Zustand der Bremsscheibeneinheit 1 liegen die Zähne 11 an der Reibringscheibe mit geringfügigem Spiel in Umfangsrichtung formschlüssig an den Flanken 9,10 des Flansches 2 an. Dadurch wird einerseits sicher die Übertragung von Bremsumfangskräften von der Reibringscheibe 3 auf den Flansch 2 gewährleistet und andererseits wird durch das tangentiale Spiel zwischen Flansch 2 und Reibringscheibe 3 eine minimale Relativbewegung zwischen diesen Bauteilen zugelassen, die einen wirksamen Korrosionsschutz darstellt. Die Reibringscheibe 3, die als belüftete Reibringscheibe über zwei Reibringe 33,34 mit entgegengesetzten Reibflächen 12,13 verfügt, die mittels radial verlaufender Stege 14 miteinander in Verbindung stehen, ist mit Hilfe eines Befestigungsringes 4 axial am Flansch 2 befestigt. Dabei schlagen die Zähne 11 nach dem axialen Aufschieben der Reibringscheibe 3 auf den Flansch 2 jeweils an einer axialen Anschlagfläche 15 des Flansches 2 an. Der in eine Nut am Flansch eingebrachte Befestigungsring 4 ist radial aufspreizbar und fesselt die Reibringscheibe 3 unter axialer Vorspannung gegenüber der axialen Anschlagfläche 15 des Flansches. Jeder Zahn 11 der Reibringscheibe 3 wird auf seiner axialen Innenseite von einem radial verlaufenden, verlängert ausgeführten Steg 16, der zur Verbindung der beiden Reibringe 33,34 dient, verstärkt. Jeder dieser verlängerten Stege 16 besitzt an seiner radialen Stirnseite eine reibringseitige Zentrierfläche 17, die mit einer zugehörigen flanschseitigen Zentrierfläche 18 die genaue Zentrierung der Reibringscheibe relativ zur Radachse 19 gewährleistet.

Der rohrförmige, axial verlaufende Grundkörper 5 des Flansches 2 besitzt an seinem Innendurchmesser Laufflächen 20,21, die zur Aufnahme von nicht gezeigten Radlagern eines Fahrzeugrades dienen. Damit kombiniert der kompakte Flansch in vorteilhafter Weise verschiedene Funktionen. Er wird sowohl als Befestigungsbauteil für die Reibringscheibe 2 und die nicht gezeigte Felge eines Fahrzeugrades genutzt und gestattet weiterhin auch die Aufnahme der Radlager. Für eine derartig ausgeführte Bremsscheibeneinheit 1 entfällt somit der heute vielfach verwendete Bremsscheibentopf, der zur Anbindung einer Reibringscheibe am Radlagerflansch dient. Daraus ergeben sich für die erfindungsgemäße Anordnung erhebliche Gewichtsvorteile.

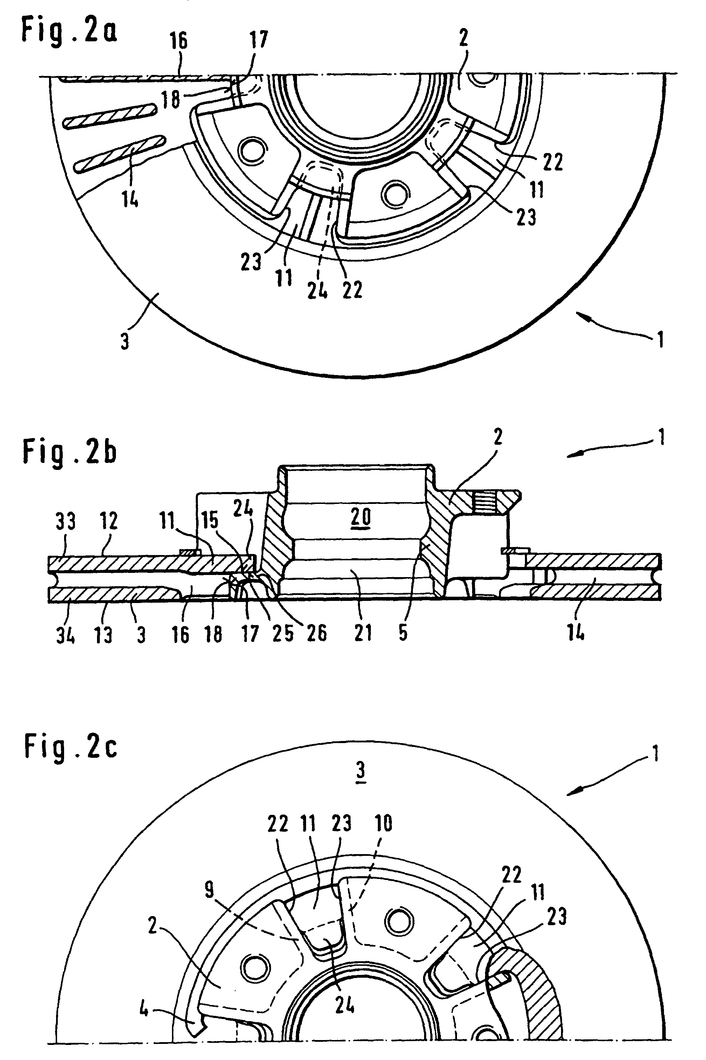

Die Fig. 2 zeigt in zwei teilweise geschnittenen Ansichten die Bremsscheibeneinheit 1 aus Fig.1 und verdeutlicht insbesondere die Befestigung der Reibringscheibe 3 am Flansch 2. Die Übertragung der Bremsumfangskräfte von der Reibringscheibe 3 auf den Flansch 2 erfolgt über die die Reibringzähne 11 in Umfangsrichtung begrenzenden Seitenflächen 22,23, die radial zum Bremsscheibenmittelpunkt angeordnet sind. Jeder Zahn 11 der Reibringscheibe 3 ist an seinen Seitenflächen 22,23 maßgenau bearbeitet und liegt im Einbauzustand zwar formschlüssig aber mit geringfügigem tangentialem Spiel an den zugehörigen Flanken 9,10 des Flansches 2 an. Im Gegensatz zu bekannten drehfesten Verbindungen von Reibring und Halteteil besitzt die erfindungsgemäße Anordnung bei Belastung in Umfangsrichtung eine gewisse Elastizität. Diese Elastizität ergibt sich sowohl aus der Gestaltung der Zähne 11 wie auch aus der Gestaltung der Flanken 9,10, die bei Belastung im Umfangsrichtung innerhalb gewisser Grenzen in der Lage sind, elastisch nachzugeben. Dadurch wird gewährleistet, daß bei Belastung in Umfangsrichtung alle Zähne 11 der Reibringscheibe 3 an der Übertragung der Umfangskräfte beteiligt sind. Es ergibt sich aus der Elastizität in Umfangsrichtung sowohl ein Toleranzausgleich als auch ein Überlastungsschutz für jeden einzelnen Zahn 11. Die Nachgiebigkeit der Flanken 9,10 des Flansches in Umfangsrichtung liegen in erster Linie darin begründet, daß sie als radial zum Bremsscheibenmittelpunkt verlaufende, freistehende Rippen in Umfangsrichtung eine gewisse Flexibilität aufweisen. Insgesamt wird durch eine in Umfangsrichtung elastische Anbringung der Reibringscheibe 3 an den Flansch 2 eine weiche, kontinuierliche und damit bauteilschonende Kraftübertragung in Umfangsrichtung erzielt.

An seinem radial inneren Ende besitzt jeder Zahn 11 der Bremsscheibeneinheit aus den Fig. 2 a bis c einen Endabschnitt 24, der in Umfangsrichtung abgestuft und eingeschnürt ist. Jeder dieser Endabschnitte 24 weist auf seiner axial innenliegenden Seite eine reibringseitige, axiale Anschlagfläche 25 auf, die an einer entsprechenden flanschseitigen Anschlagfläche 15 zum Anliegen kommt. Aufgrund der einzuhaltenden Toleranzen für die reibringseitige Anschlagfläche 25 wird diese durch Schlagen, Prägen, Fräsen oder ein anderes Fertigungsverfahren bearbeitet. An seinen seitlichen Begrenzungsflächen in Umfangsrichtung, die gegenüber den Seitenflächen 22,23 abgestuft sind und somit nicht an der Übertragung der Bremsumfangskräfte beteiligt sind, ist jeder der Endabschnitte 24 unbearbeitet, d.h. im Rohzustand der durch Gießen hergestellten Reibringscheibe 3.

Die im wesentlichen trapezförmig, radial nach innen zulaufende Form der vorstehenden Zähne 11 an der Reibringscheibe 3 verhindert ein radiales Verklemmen der Reibringscheibe 3 am Flansch 2 bei Aufweitung der Reibringscheibe 3 infolge thermischer Belastung.

Die Zentrierung der belüfteten Reibringscheibe 3, die über zwei mit radialen Stegen 14 verbundene Reibringe 33,34 verfügt, erfolgt über eine flanschseitige Zentrierfläche 18 an einem rechtwinkligen Ansatz 26 am axial inneren Ende des rohrförmigen Grundkörpers 5. Die flanschseitige Zentrierfläche 18, die vorzugsweise durch eine einfache Drehbearbeitung gewonnen wird, wirkt mit der reibringseitigen Zentrierfläche 17 an der Stirnseite des verlängerten Steges 16 auf der axial innenliegenden Zahnseite zusammen.

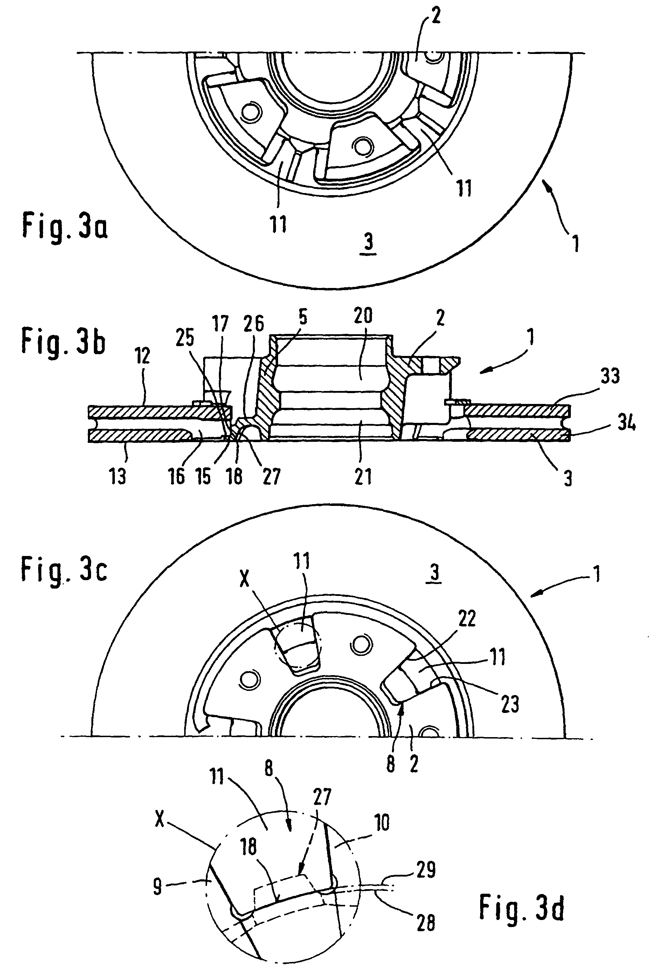

Die verschiedenen Ansichten der Fig. 3 zeigen eine Variante der Bremsscheibeneinheit 1 und zwar insbesondere die spezielle Ausführung der Anlageflächen der Reibringscheibe 3 am Flansch 2. Wie bei der bereits beschriebenen Ausführung nach Fig. 2 ragen trapezförmige, radial nach innen zulaufende Zähne 11 der Reibringscheibe 3 in zugehörige Ausnehmungen 8 des Flansches 2. Die in Umfangsrichtung jeden Zahn 11 begrenzenden Seitenflächen 22,23 liegen formschlüssig an den jede Ausnehmung 8 begrenzenden Flanken 9,10 an und können damit über ihre gesamte Abmessung zur Übertragung der Bremsumfangskräfte herangezogen werden. Der flanschseitige axiale Anschlag sowie die Zentrierung für die Reibringscheibe 3 wird in vorteilhafter Weise in Kombination an einem L-förmigen Verlängerungsstück 27 ausgebildet, das am axial innenliegenden Ende des rohrförmigen Grundkörpers 5 mit diesem einstückig verbunden ist. Am axialen Schenkel des L-förmigen Verlängerungsstückes 27 ist eine in Umfangsrichtung orientierte flanschseitige Zentrierfläche 18 angeordnet und am radialen Schenkel des Verlängerungsstückes 27 ist auf der axialen Außenseite eine axiale, flanschseitige Anschlagfläche 15 ausgebildet. Diese beiden senkrecht zueinander stehenen Flächen 15,18 am Verlängerungsstück 27 können vorteilhaft durch einen einzigen spanenden Bearbeitungsschritt (vorzugsweise durch Drehen) hergestellt werden. Dabei erweist es sich insbesondere als günstig, daß axiale Anschlagfläche 15 und Zentrierfläche 18 der innerhalb der Ausnehmungen 8 angeordneten Verlängerungsstücke 27 bei einem einzigen Bearbeitungsschritt untereinander maßgenau sind. Als weitere Optimierungsmaßnahme an der Ausnehmung 8 ist in Fig. 3 d in vergrößerter Darstellung erkennbar, daß der Fußdurchmesser 28 der Ausnehmung 8 kleiner als der Zentrierdurchmesser 29 der flanschseitigen Zentrierflächen 18 gewählt ist. Dadurch braucht nur ein räumlich begrenzter Anteil des L-förmigen Verlängerungsstückes 27 am Flansch für die Bereitstellung der Anschlag- 15 und der Zentrierfläche 18 bearbeitet werden, was zu einer deutlichen Reduzierung des Fertigungsaufwandes führt.

Insbesondere Fig. 3b ist zu entnehmen, daß die belüftete Reibringscheibe 3 mit einem die beiden Reibringe 33,34 verbindenden verlängerten Steg 16 sowohl an der flanschseitigen Anschlagfläche 15 wie auch an der flanschseitigen Zentrierfläche 18 anliegt. Damit sind lediglich klein dimensionierte reibringseitige Zentrierflächen 17 und Anschlagflächen 25 erforderlich, die sich mit einem geringen Fertigungsaufwand herstellen lassen.

Die Gesamtkonstruktion der Bremsscheibeneinheit 1 mit kompaktem gewichtsreduziertem Flansch 2 und belüfteter Reibringscheibe 3 gestattet eine verbesserte Kühlung der Reibringe 33,34 dadurch, daß der die Reibringe 33,34 durchströmende Luftstrom von beiden Axialseiten der Reibringscheibe 3 mit Kühlluft versorgt wird. Weiterhin ergibt sich durch die Anbindung der Reibringscheibe 3 am Flansch 2 eine Verringerung der Schirmungsneigung des Reibringes. Dies gewährleistet neben der Fertigungsvereinfachung ein verbessertes Komfortverhalten der Bremsscheibeneinheit 1.

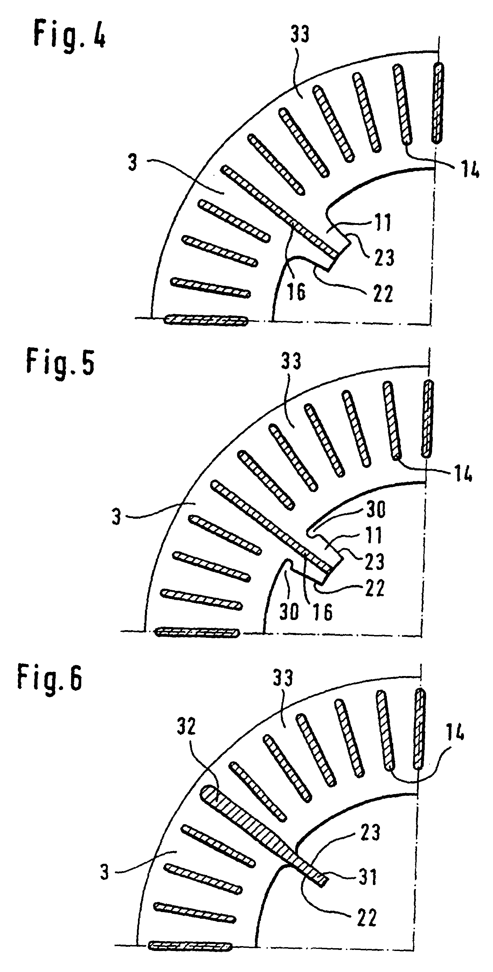

Den Fig. 4 bis 6 sind drei Varianten der Ausbildung des radial nach innen vorstehenden Zahnes 11 an der Reibringscheibe 3 gezeigt, die eine in Umfangsrichtung in gewissen Grenzen elastische Anbindung der Reibringscheibe 3 an den Flansch 2 erlauben.

In Fig. 4 ist ein Zahn 11 der Reibringscheibe 3 dargestellt mit radial zum Reibringmittelpunkt verlaufenden Seitenflächen 22,23 sowie einem auf der axial innenliegenden Zahnseite befindlichen radial verlaufenden Steg 16. Der Steg 16 ist gegenüber den übrigen Verbindungsstegen 14 zwischen den beiden Reibringen 33,34 verlängert ausgeführt und erstreckt sich vom radial inneren Zahnende bis etwa zum Reibringaußendurchmesser. Der Steg 16 führt dabei zu einer Verstärkung des Zahnes 11 bei gleichzeitiger Gewährleistung einer Elastizität in Umfangsrichtung. Weiterhin kann der Steg 16 in vorteilhafter Weise zur Realisierung des axialen Anschlags bzw. der Zentrierung der Reibringscheibe 3 am Flansch 2 genutzt werden.

Fig. 5 ist eine Weiterentwicklung der Ausführung nach Fig. 4 zu entnehmen, wobei jeder Zahn 11 an seinem Fuß etwa bogenförmige Kerben 30 in Umfangsrichtung besitzt, die zur Verbesserung der Flexibilität in Umfangsrichtung beitragen. Zur Vermeidung einer allzu großen Kerbwirkung sind diese Kerben 30 mit einer etwa bogenförmigen Kontur mit kontinuierlichen Radienübergängen versehen, wobei möglichst große Radien gewählt werden.

Fig. 6 ist eine Variante zu entnehmen, wobei zur Übertragung der Bremsumfangskräfte von der Reibringscheibe 3 auf den Flansch 2 lediglich eine stegförmige Zahnrippe 31 verbleibt. Die radial nach innen aus der Reibringscheibe 3 hervorragende Zahnrippe 31 geht aus einer die beiden Reibringe 33,34 verbindenden Rippe 32 hervor, die gegenüber den übrigen Verbindungsstegen 14 verstärkt sowie verlängert ausgeführt ist. Gleichsam zu den beiden übrigen Varianten wird die Zahnrippe 31 in Umfangsrichtung von radial auf den Reibringmittelpunkt zulaufenden Seitenflächen 22,23 begrenzt. Die Gestaltung als Zahnrippe 31 zur Übertragung der Umfangskräfte gestattet bei sicherer Funktionalität eine größtmögliche Elastizität in Tangentialrichtung. Bei Verwendung einer Reibringscheibe mit Zahnrippe 31 nach Fig. 6 ist selbstverständlich eine entsprechende Gestaltung der Ausnehmungen 8 des Flansches 2 vorzunehmen.

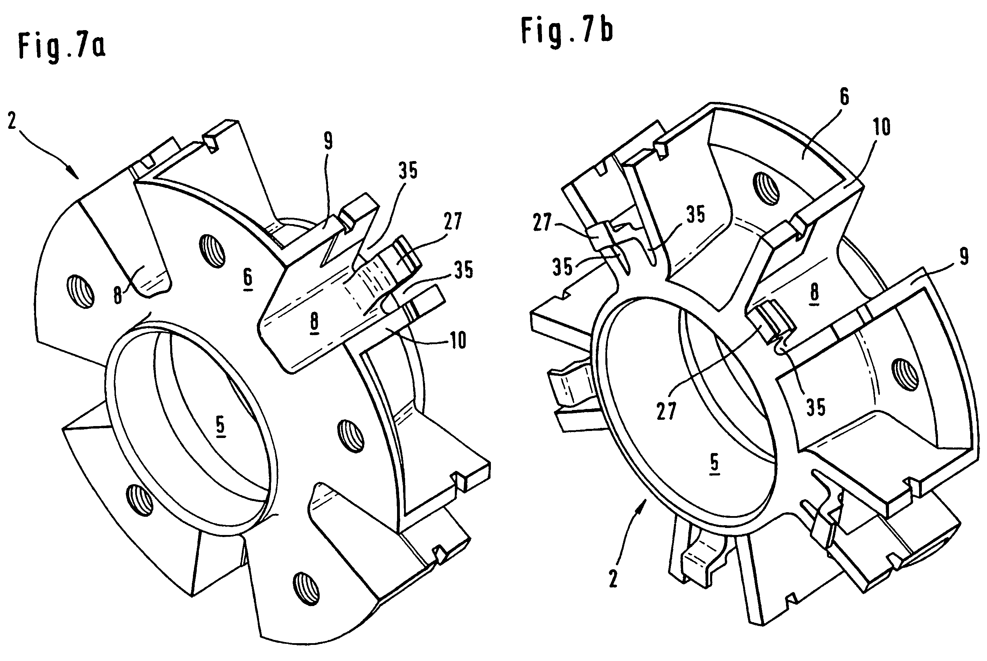

In den Figuren 7-9 sind drei Varianten des Flansches 2 aufgeführt, bei denen die Flanken 9,10 der Ausnehmungen 8 in Umfangsrichtung elastisch ausgebildet sind.

Die Figuren 7a und 7b zeigen zwei räumliche Ansichten einer Weiterentwicklung des Flansches 2 aus Figur 3. Sowohl die L-förmigen Verlängerungsstücke 27 wie auch die die Ausnehmungen 8 seitlich begrenzenden Flanken 9,10 sind mit den dem rohrförmigen Grundkörper 5 des Flansches 2 einstückig verbunden. Im Unterschied zu der Flanschausführung nach Figur 3 ist zwischen dem Verlängerungsstück 27 und dem Fußbereich der Flanken 9,10 keine versteifende Anbindung vorgesehen. Es verbleibt zwischen Verlängerunsstück 27 und Flanke 9,10 ein sich bis zum Flanschgrundkörper 5 erstreckender Spalt 35, der vorzugsweise direkt bei der Flanschherstellung ausgebildet wird. Es ergibt sich daraus eine Erhöhung der Flexibilität der Flanken 9,10 in Umfangsrichtung.

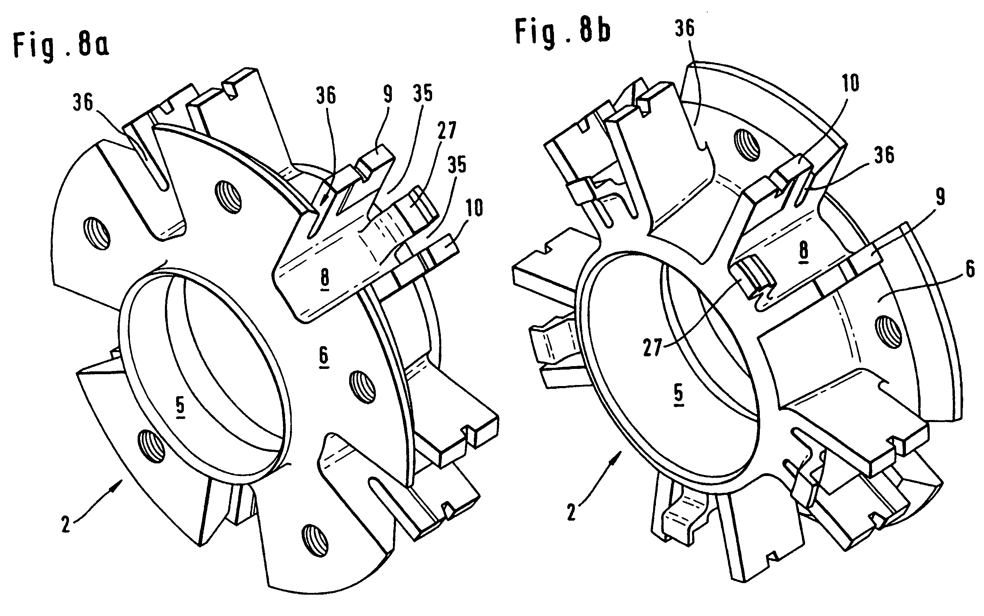

Den Figuren 8a und 8b ist eine Fortentwicklung der Variante nach Figur 7 zu entnehmen, bei der zusätzlich zwischen der Anschlußplatte 6 und den Flanken 9,10 eine schlitzartige Ausnehmung 36 vorgesehen ist. Die schlitzartigen Ausnehmungen 36 verlaufen bis annähernd an den Flanschgrundkörper 5 heran und führen zu einer weiteren Steigerung der Elastizität der Flanken 9,10 in Umfangsrichtung. Vorteilhafterweise lassen sich die schlitzartigen Ausnehmungen 36 direkt beim Gesenkschmieden des Flansches anformen. Es ist aber auch eine Nachbearbeitung des Flansches denkbar, beispeilsweise durch Drehen.

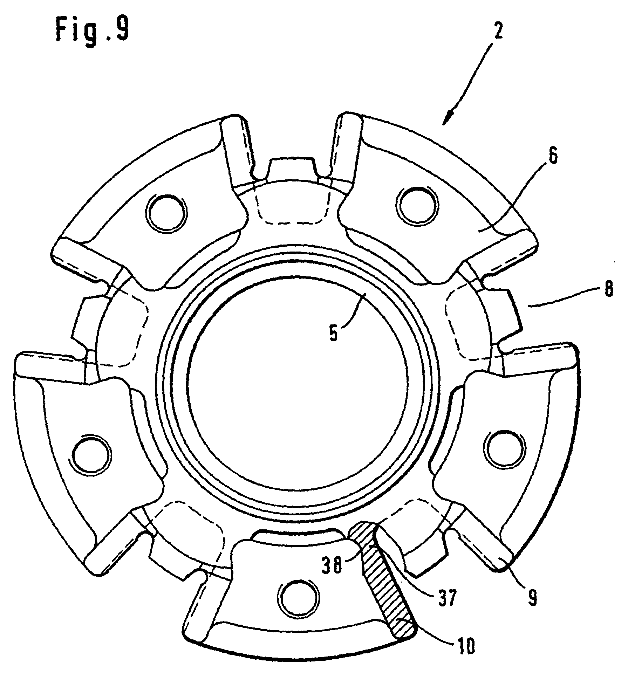

Figur 9 zeigt einen Flansch 2 mit Flanken 9,10 die in ihrem Fußbereich an der Anbindung zum Flanschgrundkörper einen reduzierten Flankenquerschnitt 37 aufweisen. Dabei befindet sich die Einschnürung 38 am Flankenfuß auf der der Ausnehmung 8 abgewandten Flankenseite, wodurch weiterhin die gesamte der Ausnehmung 8 zugewandte Flankenfläche für die Anlage eines Reibringzahnes 11 und damit die Übertragung der Umfangskräfte bereitsteht. Eine Einschnürung auf beiden Flankenseiten ist selbstverständlich ebenfalls möglich. Der reduzierte Flankenquerschnitt 37 liefert einen zusätzlichen Beitrag zur flanschseitigen Erhöhung der Elastizität der Reibringanbindung in Umfangsrichtung durch Erleichterung der tangentialen Schwenkbarkeit der Flanken 9,10.

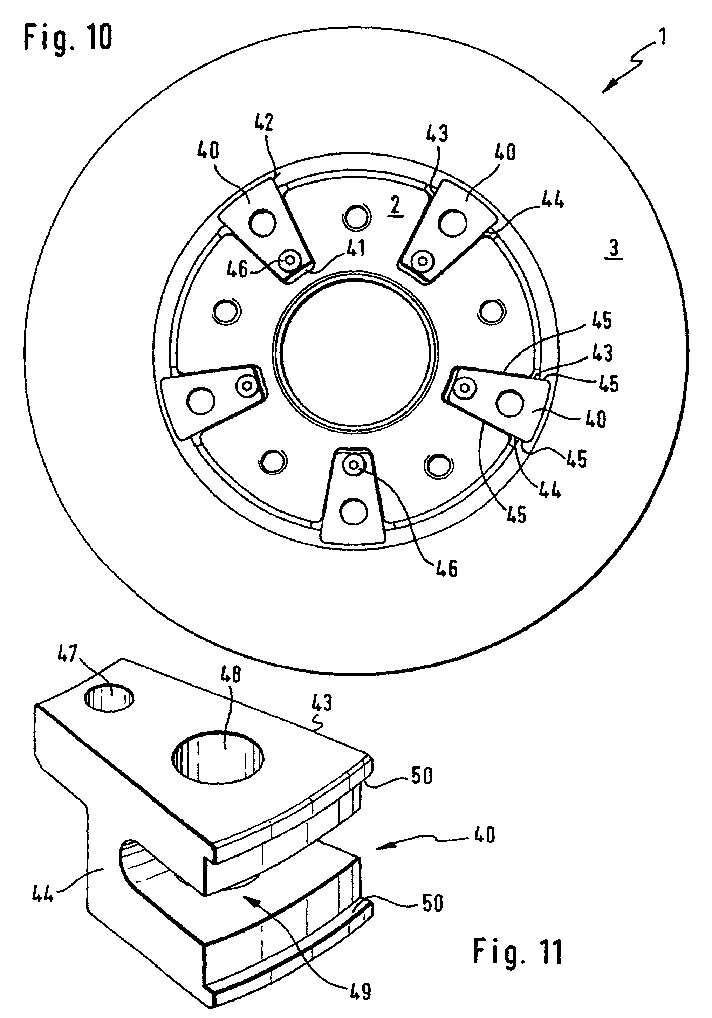

Den Figuren 10-12 sind Varianten von Bremsscheibeneinheiten 1 zu entnehmen, bei denen die Reibringscheibe 3 mittels Befestigungselementen 40 axial am Flansch 2 befestigt ist, wobei die Befestigungselemente 40 gleichzeitig die Verzahnung zwischen Flansch 2 und Reibringscheibe 3 bilden und damit auch die Bremsumfangskräfte vollständig übertragen.

So ist in Figur 10 eine im wesentlichen aus Flansch 2 und Reibringscheibe 3 bestehende Bremsscheibeneinheit 1 abgebildet, bei der die Reibringscheibe 3 über fünf Befestigungselemente 40 am Flansch 2 befestigt ist. Die Befestigungselemente 40 sind, wie auch in Fig. 11 zu erkennen ist, keilförmig gestaltet und zwischen der radialen Flanschaußenseite und der radialen Innenseite der Reibringscheibe angeordnet. Sie fixieren die Reibringscheibe 3 sowohl in Achs- wie auch in Umfangsrichtung am Flansch 2. Im einzelnen erstreckt sich jedes der Befestigungselemente 40 in einander zugehörige, sich gegenüberliegende Ausnehmungen 41,42 sowohl des Flansches 2 wie auch der Reibringscheibe 3. Analog zu den bereits beschriebenen Varianten einer Bremsscheibeneinheit 1 wird auch jedes Befestigungselement 40 in Umfangsrichtung von sich im wesentlichen radial erstreckenden Seitenflächen 43,44 begrenzt. Die Seitenflächen 43,44 liegen ihrerseits an entsprechenden Anschlagflächen 45 der Reibringscheiben- bzw. Flanschausnehmungen 41,42 an. Ihre radiale Ausrichtung gestattet eine günstige Übertragung der Bremsumfangskräfte und verhindert darüber hinaus ein Verklemmen bzw. Verspannen der einzelnen Bauteile im Falle einer unterschiedlichen radialen Wärmeausdehnung von Reibringscheibe und Flansch während des Bremsbetriebes.

Jedes der Befestigungselemente 40 wird lösbar entweder am Flansch 2 oder aber an der Reibringscheibe 3 gehalten, beispielsweise wie in Fig. 10 gezeigt durch Befestigungsschrauben 46. In der Ausführung nach Figur 10 besitzen die keilförmigen Befestigungselemente 40 an ihrem radial innenliegenden Ende jeweils eine Durchgangsbohrung 47, mittels derer das Befestigungselement 40 am Flansch 2 verschraubt wird. Die Halterung jedes Befestigungselementes 40 mit nur einer Schraube 46 erlaubt einen Toleranzausgleich durch die geringfügige Verdrehmöglichkeit um die Achse der Durchgangsbohrung 47. Außerdem werden dadurch idealerweise alle Befestigungelemente 40 an der Übertragung der Bremsumfangkräfte beteiligt. Zur Gewichtsreduzierung ist jedes Befestigungselement 40 mit einem weiteren Durchgangsloch 48 sowie einer Aussparung 49 versehen, deren Ausgestaltung selbstverständlich nicht auf die gezeigte Ausführungsform beschränkt ist.

Zur Montage der Bremsscheibeneinheit 1 wird die Reibringscheibe 3 axial auf den Flansch 2 aufgeschoben, wobei die einander zugehörigen Ausnehmungen 41,42 gegenüberliegend angeordnet sind und die Zentrierung der Reibringscheibe 3 anhand entsprechender Flächen am Flansch wie auch an der Reibringscheibe relativ zum Flansch erfolgt. Danach werden die Befestigungselemente 40 in die Ausnehmungen 41,42 eingeschwenkt und am Flansch 2 verschraubt. Hierbei wird die axiale Position der Reibringscheibe durch radiale Absätze 50 an der Außenseite der Befestigungselemente 40 fixiert.

Der wesentliche Vorteil der kombinierten Befestigungs- und Kraftübertragungselemente 40 besteht darin, daß sie als getrennte Bauteile hinsichtlich sowohl der Gestaltung als auch insbesondere der Werkstoffauswahl gezielt ausgelegt werden können. Dabei spielt die Werkstoffauswahl eine besondere Rolle, da deratige Befestigungselemente, die auch zur Bremskraftübertragung herangezogen werden, einer erheblichen Werkstoffbeanspruchung unterliegen und demzufolge möglichst aus einem hochwertigen Werkstoff auszuführen sind. Darüber hinaus ergibt sich die Möglichkeit je nach Bedarfsfall unterschiedliche Materialien für den Flansch 2, die Reibringscheibe 3 und die Befestigungselemente 40 vorzusehen, wobei auch die Korrosionsbeständigkeit bei der Werkstoffauswahl berücksichtigt werden kann.

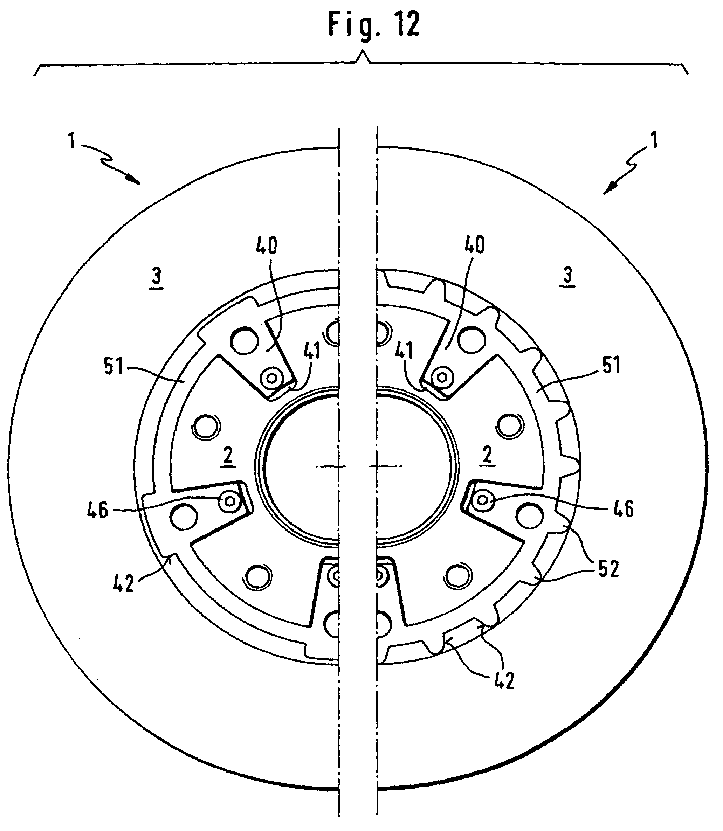

Figur 12 zeigt zwei weitere Ausgestaltungsbeispiele für eine Bremsscheibeneinheit 1, bei der die in Figur 10 dargestellten kombinierten Befestigungs- und Kraftübertragungselemente 40 durch einen Haltering 51 einstückig miteinander verbunden sind. Es ergibt sich damit gegenüber der Ausführung nach Figur 10 eine deutlich vereinfachte Handhabung insbesondere während der Montage der Bremsscheibeneinheit 1, da mit dem Haltering nur noch ein einziges Befestigungsbauteil an der Bremsscheibeneinheit zu verbauen ist. Als Konsequenz der Einteiligkeit des Halteringes 51 mit Befestigungselementen 40 muß allerdings die Reibringscheibe 3 am Flansch 2 nicht nur zentriert werden sondern es ist auch noch ein nicht gezeigter axialer Anschlag am Flansch erforderlich, bis zu dem die Reibringscheibe während der Montage aufgeschoben wird. Der gesamte Haltering 51, der die Befestigungselemente 40 trägt, wird in bekannter Weise mittels Schrauben 46 lösbar am Flansch 2 befestigt und verspannt damit die Reibringscheibe 3 axial gegenüber dem Anschlag am Flansch 2. Dabei ist in der linken Hälfte von Figur 12 die Kontur der Befestigungselemente 40 erhalten geblieben, wodurch sich an der Reibringscheibe 3 fünf gleichmäßig über den Umfang verteilte Übertragungspunkte für die Bremsumfangskraft ergeben. Die Verwendung eines Halteringes 51 ermöglicht jedoch die Anzahl der über den Umfang verteilten Kraftübertragungspunkte insbesondere an der Reibringscheibe 3 frei wählbar zu verändern.

Die rechte Hälfte von Figur 12 zeigt eine Variante des Halteringes 51, bei der der Haltering 51 mit mehreren radial nach außen sich erstreckenden nockenförmigen Erhebungen 52 versehen ist, wobei die nockenförmigen Erhebungen 52 formschlüssig in zugehörige Ausnehmungen 42 in der Reibringscheibe 3 hineinragen. Die Erhebungen 52 dienen der Übertragung der Bremsumfangskraft und die Erhöhunhg ihrer Anzahl verstärkt den gewünschten Effekt der möglichst kontinuierlichen Verteilung der Bremsumfangskraft über gesamten inneren Umfang der Reibringscheibe 3.

Die jeweilige Ausführung der einstückigen Verbindung der Befestigungselemente zu einem einzigen kombinierten Halteund Kraftübertragungsbauteil ist hierbei nicht auf die erläuterten Ausgestaltungsbeispiele beschränkt. Gleiches gilt auch für die Formgebung der Abschnitte des kombinierten Halte- und Kraftübertragungsbauteiles, die zur Übertragung der Bremsumfangskräfte herangezogen werden (z. B. Ausnehmungen 41,42; Erhebungen 52).

## Patentansprüche

1. Bremsscheibeneinheit (1) mit einem Flansch (2) und einer Reibringscheibe (3), die über eine radiale Verzahnung drehfest mit dem Flansch (2) verbunden ist, mit zumindest zwei die Verzahnung bildenden, radial nach innen hervorragenden Zähnen (11) an der Reibringscheibe (3) und zugehörigen Ausnehmungen (8) am Umfang des Flansches (2) und mit einem Befestigungsring (4), der die Reibringscheibe (3) unter axialer Vorspannung lösbar am Flansch (2) befestigt, **dadurch gekennzeichnet, daß** jeder Zahn (11) in Umfangsrichtung derart elastisch ausgebildet ist, daß bei Belastung in Umfangsrichtung alle Zähne (11) an der Kraftübertragung beteiligt sind und daß jeder Zahn (11) an der Reibringscheibe (3) an seinem radial inneren Ende einen Abschnitt (24) aufweist, der sowohl in Umfangsrichtung abgestuft und eingeschnürt ist als auch auf seiner axialen Innenseite einen radialen Absatz besitzt.

2. Bremsscheibeneinheit (1) nach Anspruch 1, **dadurch gekennzeichnet, daß** jeder Zahn (11) in Umfangsrichtung von radial zum Bremsscheibenmittelpunkt verlaufenden Seitenflächen (22,23) begrenzt wird.

3. Bremsscheibeneinheit (1) nach zumindest einem der vorherigen Ansprüche, **dadurch gekennzeichnet, daß** wenigstens ein Zahn (11) an seinem Fuß eine vorzugsweise bogenförmige Kerbe (30) besitzt.

4. Bremsscheibeneinheit (1) nach zumindest einem der vorherigen Ansprüche, **dadurch gekennzeichnet, daß** die Bremsscheibeneinheit (1) als belüftete Reibringscheibe (3) zwei Reibringe (33,34) mit jeweils einer außenliegenden Reibfläche (12,13) aufweist, die mit radial verlaufenden Stegen (14,16,32) verbunden sind, wobei die Zähne (11) sich als radiale Verlängerung eines der Reibringe (33,34) radial nach innen erstrecken.

5. Bremsscheibeneinheit nach Anspruch 4, **dadurch gekennzeichnet, daß** auf der dem Bremsscheibeninneren zugewandten Zahnseite ein radialer Steg (16) verläuft, der sich vom radial inneren Rand des Zahnes (11) bis annähernd zum Reibringaußendurchmesser erstreckt.

6. Bremsscheibeneinheit nach den Ansprüchen 4 und 5, **dadurch gekennzeichnet, daß** wenigstens eine Zahn (11) als radial sich erstreckende in Umfangsrichtung schmale Zahnrippe (31) ausgeführt ist, die als radial verlängerte, die Reibringe (33,34) verbindende Rippe (32) ausgebildet ist, welche in ihren Abmessungen gegenüber den anderen Stegen (14) zwischen den Reibringen (33,34) verstärkt ist.

7. Bremsscheibeneinheit zumindest nach Anspruch 1, **dadurch gekennzeichnet, daß** jeder Reibringzahn (11) auf seiner axial inneren Seite eine reibringseitige Anschlagfläche (25) besitzt und jeder radiale Absatz eine in Umfangsrichtung orientierte reibringseitige Zentrierfläche (17) aufweist.

8. Bremsscheibeneinheit (1) nach Anspruch 4 und zumindest einem der Ansprüche 1 oder 7, **dadurch gekennzeichnet, daß** der radiale Absatz vom Zahn (11) und dem Steg (16) gebildet wird und die reibringseitige Zentrierfläche (17) an der radial innenliegenden Stirnfläche des Steges (16) ausgebildet ist.

9. Bremsscheibeneinheit (1) nach zumindest einem der vorherigen Ansprüche, **dadurch gekennzeichnet, daß** jede Ausnehmung (8) in ihrem Fußbereich auf der axial inneren Seite des Flansches (2) mit einem L-förmigen Verlängerungsstück (27) versehen ist, dessen axialer Schenkel auf seiner radialen Außenseite eine in Umfangsrichtung orientierte Zentrierfläche (18) aufweist und dessen radialer Schenkel auf seiner axialen Außenseite eine axiale Anschlagfläche (15) bildet.

10. Bremsscheibeneinheit (1) nach Anspruch 4 und Anspruch 9, **dadurch gekennzeichnet, daß** am radialen Steg (16) sowohl die reibringseitige Zentrierfläche (17) wie auch die reibringseitige Anschlagfläche (25) vorgesehen ist.

11. Bremsscheibeneinheit (1) nach Anspruch 9, **dadurch gekennzeichnet, daß** der Fußdurchmesser (28) der Flanschausnehmungen (8) kleiner als der Durchmesser (29) der in Umfangsrichtung orientierten flanschseitigen Zentrierflächen (18) ist.

12. Bremsscheibeneinheit (1) zumindest nach Anspruch 9, **dadurch gekennzeichnet, daß** die Ausnehmungen (8) in Umfangsrichtung von axial mit einem Flanschgrundkörper (5) verbundenen Flanken (9,10) begrenzt sind, wobei jede Flanke (9,10) in Umfangsrichtung derart elastisch ausgebildet ist, daß bei Belastung in Umfangsrichutng alle Zähne (11) mit den zugehörigen Flanken (9,10) an der Kraftübertragung beteiligt sind, wobei jede Flanke (9,10) und jedes L-förmige Verlängerungsstück (27) einteilig mit dem rohrförmigen Flanschgrundkörper (5) ve=bunden ist, so daß innerhalb der Ausnehmung (8) zwischen Flanke (9,10) und Verlängerungsstück (27) ein sich bis zum Flanschgrundkörper (5) erstreckender Spalt (35) verbleibt.

13. Bremscheibeneinheit zumindest nach Anspruch 12, **dadurch gekennzeichnet, daß** zwischen der Flanke (9,10) und der Anschlußplatte (6) des Flansches (2) eine schlitzartige Ausnehmung (36) vorgesehen ist.

14. Bremsscheibeneinheit zumindest nach Anspruch 12, **dadurch gekennzeichnet, daß** der Querschnitt der Flanke (9,10) im Bereich der Anbindung an den Flanschgrundkörper (5) verringert ist.

15. Bremsscheibeneinheit (1) mit einem Flansch (2) und einer Reibringscheibe (3), die über eine radiale Verzahnung drehfest mit dem Flansch (2) verbunden ist, mit wenigstens zwei Befestigungselementen (40), die die Reibringscheibe (3) lösbar am Flansch (2) befestigt, wobei die Befestigungselemente (40) formschlüssig innerhalb von einander zugehörigen, sich gegenüberliegenden Ausnehmungen (41,42) am Außenumfang des Flansches (2) sowie am Innenumfang der Reibringscheibe (3) angeordnet sind und am Flansch (2) bzw. an der Reibringscheibe (3) lösbar befestigt sind **dadurch gekennzeichnet, daß** die Befestigungselemente (40) die Reibringscheibe (3) axial wie auch in Umfangsrichtung am Flansch (2) fixieren und daß mehrere Befestigungselemente (40) einstückig miteinander verbunden sind.

## Claims

1. Brake disc unit (1) with a flange (2) and a friction ring disc (3) being unrotatably coupled to the flange (2) by way of a radial toothed system, with at least two teeth (11) on the friction ring disc (3) that project in a radially inward direction and form the toothed system and associated recesses (8) at the periphery of the flange (2), and with a fastening ring (4) detachably fastening the friction ring disc (3) under axial preload to the flange (2),
**characterized in that** each tooth (11) is designed elastically in a circumferential direction in such a fashion that, when subjected to load in a circumferential direction, all teeth (11) participate in the transmission of forces and that each tooth (11) of the friction ring disc (3) at its radially inward end includes a portion (24) which is both stepped and constricted in a circumferential direction and has a radial step on its axial inner side.

2. Brake disc unit (1) as claimed in claim 1,
**characterized in that** each tooth (11) in a circumferential direction is limited by lateral surfaces (22, 23) extending radially towards the brake disc centre.

3. Brake disc unit (1) as claimed in at least one of the preceding claims,
**characterized in that** at least one tooth (11) has a preferably arcuate notch (30) at its base.

4. Brake disc unit (1) as claimed in at least one of the preceding claims,
**characterized in that** the brake disc unit (1), being an aerated friction ring disc (3), includes two friction rings (33, 34) with respectively one outer friction surface (12, 13) being connected to radially extending webs (14, 16, 32), with said teeth (11) extending in a radially inward direction as a radial extension of one of the friction rings (33, 34).

5. Brake disc unit as claimed in claim 4,
**characterized in that** extending on the tooth side facing the interior of the brake disc is a radial web (16) that extends from the radially inward edge of the tooth (11) roughly up to the outside diameter of the friction ring.

6. Brake disc unit as claimed in claims 4 and 5,
**characterized in that** at least one tooth (11) is designed as a radially extending tooth rib (31) that is narrow in a circumferential direction and is configured as a radially extended rib (32) connecting the friction rings (33, 34), said rib being increased in dimensions compared to the other webs (14) between the friction rings (33, 34).

7. Brake disc unit as claimed in at least claim 1,
**characterized in that** each friction ring tooth includes on its axially inner side a stop surface (25) facing the friction ring, and each radial step includes a centring surface (17) facing the friction ring and oriented in a circumferential direction.

8. Brake disc unit (1) as claimed in claim 4 and at least one of claims 1 or 7,
**characterized in that** the radial step is formed by tooth (11) and web (16) and the centring surface (17) facing the friction ring is designed on the radially inward end surface of web (16).

9. Brake disc unit (1) as claimed in at least any one of the preceding claims,
**characterized in that** on the axially inner side of the flange (2), the base portion of each recess (8) is provided with an L-shaped extension member (27) having an axial leg that includes on its radial outside surface a centring surface (18) oriented in a circumferential direction and a radial leg that forms an axial stop surface (15) on its axial outside surface.

10. Brake disc unit (1) as claimed in claim 4 and claim 9,
**characterized in that** both the centring surface (17) facing the friction ring and the stop surface (25) facing the friction ring are provided on the radial web (16).

11. Brake disc unit (1) as claimed in claim 9,
**characterized in that** the base diameter (28) of the flange recesses (8) is smaller than the diameter (29) of the flange-side centring surfaces (18) oriented in a circumferential direction.

12. Brake disc unit (1) as claimed in at least claim 9,
**characterized in that** the recesses (8) in a circumferential direction are limited by flanks (9, 10) connected axially to a flange base member (5), with each flank (9, 10) in a circumferential direction being elastically designed such that, when subjected to load in a circumferential direction, all teeth (11) with associated flanks (9, 10) participate in the transmission of forces, with each flank (9, 10) and each L-shaped extension member (27) being integrally connected to the tubular flange base member (5) so that a slot (35) that extends up to the flange base member (5) is maintained within the recess (8) between flank (9, 10) and extension member (27).

13. Brake disc unit as claimed in at least claim 12,
**characterized in that** a slotted recess (36) is provided between the flank (9, 10) and the connecting plate (6) of flange (2).

14. Brake disc unit as claimed in at least claim 12,
**characterized in that** the cross-section of the flank (9, 10) is reduced in the area of connection to the flange base member (5).

15. Brake disc unit (1) with a flange (2) and a friction ring disc (3) being unrotatably coupled to the flange (2) by way of a radial toothed system, with at least two fastening elements (40) detachably fastening the friction ring disc (3) to the flange (2), wherein the fastening elements (40) are arranged in form lock within associated, opposed recesses (41, 42) at the outside periphery of flange (2) and at the inside periphery of the friction ring disc (3) and are detachably attached to the flange (2) or the friction ring disc (3),
**characterized in that** the fastening elements (40) fix friction ring disc (3) to flange (2) in an axial and circumferential direction, and that several fastening elements (40) are integrally connected to each other.

## Revendications

1. Unité de disque de frein (1) comportant une bride (2) et un disque annulaire de friction (3), qui est relié solidairement en rotation à la bride (2) par l'intermédiaire d'une denture radiale, et comportant au moins deux dents (11) qui forment la denture, font saillie radialement vers l'intérieur et sont situées sur le disque annulaire de friction (3), et des évidements associés (8) situés sur la périphérie de la bride (2), et comportant une bague de fixation (4), qui fixe de façon amovible le disque annulaire de friction (3) sur la bride (2) au moyen d'une précontrainte axiale, **caractérisée en ce que** chaque dent (11) est agencée de manière à être élastique dans la direction circonférentielle de telle sorte que lors d'une contrainte dans la direction circonférentielle, toutes les dents (11) participent à la transmission de force et que chaque dent (11) sur le disque annulaire de friction (3) possède, sur son extrémité intérieure du point de vue radial, une section (24), qui est étagée et rétrécie dans la direction circonférentielle et possède également une partie étagée radiale sur son côté intérieur axial.

2. Unité de disque de frein (1) selon la revendication 1, **caractérisée en ce que** chaque dent (11) est limitée dans la direction circonférentielle par des surfaces latérales (22, 23) qui s'étendent radialement par rapport au centre du disque de frein.

3. Unité de disque de frein (1) selon au moins une des revendications précédentes, **caractérisée en ce qu'**au moins une dent (11) possède, à son pied, une encoche de préférence de forme arquée (30).

4. Unité de disque de frein (1) selon au moins l'une des revendications précédentes, **caractérisée en ce que** l'unité de disque de frein (1) agencée sous la forme d'un disque annulaire de friction aéré, possède deux anneaux de friction (33, 34) comportant chacun une surface de friction (12, 13) située du côté extérieur et qui sont reliés par des barrettes radiales (14, 16, 32), les dents (11) s'étendant radialement vers l'intérieur sous la forme d'un prolongement radial de l'un des anneaux de friction (33, 34).

5. Unité de disque de frein selon la revendication 4, **caractérisée en ce que** sur le côté des dents tournées vers l'intérieur du disque de frein est disposée une barrette radiale (16), qui s'étend depuis le bord intérieur, du point de vue radial, de la dent (11) approximativement jusqu'à la périphérie extérieure de l'anneau de friction.

6. Unité de disque de frein selon les revendications 4 et 5, **caractérisée en ce qu'**au moins une dent (11) est agencée sous la forme d'une nervure de dent (31) qui s'étend radialement, est étroite dans la direction circonférentielle et est agencée sous la forme d'une nervure (32), qui est prolongée radialement, reliant les anneaux de friction (33, 34) et est renforcée, dans ses dimensions, par rapport aux autres barrettes (14) situées entre les anneaux de friction (33, 34).

7. Unité de disque de frein au moins selon la revendication 1, **caractérisée en ce que** chaque dent (11) de l'anneau de friction possède, sur son côté intérieur du point de vue axial une surface de butée (25) situé du côté de l'anneau de friction et que chaque partie étagée radiale possède une surface de centrage (17) située du côté de l'anneau de friction et orientée dans la direction circonférentielle.

8. Unité de disque de frein (1) selon la revendication 4 et au moins selon l'une des revendications 1 ou 7, **caractérisée en ce que** la partie étagée radiale est formée par la dent (11) et la barrette (16) et que la surface de centrage (17) située du côté de l'anneau de friction est formée sur la surface frontale, intérieure du point de vue radial, de la barrette (16).

9. Unité de disque de frein (1) selon une au moins des revendications précédentes, **caractérisée en ce que** chaque évidement (8) est pourvu, dans la zone de son pied, sur le côté intérieur du point de vue axial de la bride (2), d'un élément de prolongement en forme de L (27), dont la branche axiale comporte, sur son côté radial extérieur, une surface de centrage (18) orientée dans la direction circonférentielle et dont la branche radiale forme, sur son côté extérieur axial, une surface de butée axiale (15).

10. Unité de disque de frein (1) selon la revendication 4 et la revendication 9, **caractérisée en ce qu'**aussi bien la surface de centrage (17) située du côté de l'anneau de friction que la surface de butée (25) situé du côté de l'anneau de friction sont prévues sur la barrette radiale (16).

11. Unité de disque de frein (1) selon la revendication 9, **caractérisée en ce que** le diamètre (28) du pied des évidements (8) de la bride est inférieur au diamètre (29) des surfaces de centrage (18) du côté de bride, qui sont orientées dans la direction circonférentielle.

12. Unité de disque de frein (1) au moins selon la revendication 9, **caractérisée en ce que** les évidements (8) sont limités dans la direction circonférentielle par des flancs (9, 10), qui sont reliés axialement à un corps de base (5) de la bride, et dans lequel chaque flanc (9, 10) est agencé de manière à être élastique dans la direction circonférentielle de telle sorte que dans le cas d'une charge dans la direction circonférentielle, toutes les dents (11) pourvues des flancs associés (9, 10) participent à la transmission de force, et dans lequel chaque flanc (9, 10) et chaque élément de prolongement en forme de L (27) sont réunis d'un seul tenant au corps de base en forme de bride tubulaire (5), de sorte qu'une fente (35), qui s'étend jusqu'au corps de base (5) de la bride, subsiste dans l'évidemment (8) entre les flancs (9, 10) et l'élément de prolongement (27).

13. Unité de disque de frein au moins selon la revendication 12, **caractérisée en ce qu'**un évidement en forme de fente (36) est prévu entre le flanc (9, 10) et la plaque de raccordement (6) de la bride (2).

14. Unité de disque de frein au moins selon la revendication 12, **caractérisée en ce que** la section transversale des flancs (9, 10) est réduite dans la zone de la liaison au corps de base (5) de la bride.

15. Unité de disque de frein (1) comportant une bride (2) et un disque annulaire de friction (3), qui est relié solidairement en rotation à la bride (2) par l'intermédiaire d'une denture radiale, et comportant au moins deux éléments de fixation (40), qui fixent le disque annulaire de friction (3) de façon amovible à la bride (2), et dans lequel les éléments de fixation (40) sont disposés selon une liaison par formes complémentaires à l'intérieur d'évidements (41, 42), qui sont associés entre eux et sont opposés, sur la périphérie extérieure de la bride (2) ainsi que sur la périphérie intérieure du disque annulaire de friction (3) et sont fixés de façon amovible à la bride (2) ou au disque annulaire de friction (3), **caractérisée en ce que** les éléments de fixation (40) fixent le disque annulaire de friction (3) axialement ainsi que dans la direction circonférentielle sur la bride (2) et que plusieurs éléments de fixation (40) sont reliés entre eux d'un seul tenant.
